# EUROPEAN PATENT APPLICATION

(11) **EP 0 720 965 A1**
(43) Date of publication of application: **10.07.1996**
(21) Application number: 96100041.1
(22) Date of filing: 03.01.1996
(51) Int. Cl.: C01B 3/00

(54) **Hydrogen storage alloy**

(30) Priority: 05.01.1995 JP 264/95
(71) Applicant: MATSUSHITA ELECTRIC INDUSTRIAL CO., LTD., Kadoma-shi, Osaka-fu, 571 (JP)
(72) Inventor: Morita, Yoshio, Suita City, 565 (JP); Kuranaka, Sou, Osaka City, 534 (JP); Gamou, Takaharu, Fujiidera City, 583 (JP)
(74) Representative: Dr. Elisabeth Jung Dr. Jürgen Schirdewahn Dipl.-Ing. Claus Gernhardt

(57) **Abstract**

An AB₂-type Laves phase hydrogen storage alloy with a large effective hydrogen transfer capacity is disclosed. This alloy is represented by the general formula Tiₐ,Zr₁₋ₐM₂,
wherein M is at least one element selected from the group consisting of Mn, Cr, V, Fe, Co and Mo and 0 ≦ a ≦ 1, the alloy having a Laves phase of a crystal structure, and containing at least one nonmetallic element selected from the group consisting of B, C, N, S and Se, up to 2 atomic %. M may be partially substituted for by either Al, Zn, Cu, Nb or Ni.

## Description

### BACKGROUND OF THE INVENTION

### 1. Field of the Invention

The present invention relates to a hydrogen storage alloy which can absorb and desorb hydrogen in a reversible manner and serves as an effective functional material for the utilization of hydrogen energy.

### 2. Description of the Prior Art

In general, it is desirable for a hydrogen storage alloy to possess the following properties; ease of activation, a large hydrogen storage capacity, a hydrogen absorption-desorption curve with a wide plateau region of exceptional flatness, a small hysteresis, a heat of formation suited to its operating temperature, a large hydrogen absorption-desorption velocity, resistance to poisoning by impurities and, good thermal conductivity. Of these, the most important of these is an effectively large hydrogen storage capacity.

As is well known, RNi₅-type alloys (R is La or misch metal) are hydrogen storage alloys with a comparatively large discharge capacity and have been put to commercial use as negative electrodes for nickel hydrogen storage batteries. LaNi₅ alloy has a hydrogen storage capacity of 1.4 wt%, an equilibrium hydrogen absorption-desorption pressure of 0.2 - 0.3 MPa at room temperature, is easy to handle and, can absorb and desorb hydrogen close to room temperature.

Further, in an effort to reduce the cost of LaNi₅ alloy, misch metal, which is a composite of unrefined rare earth metals, may be used instead of expensive lanthanum, and misch metal-nickel multi-element alloys to which ternary, quaternary and quinternary components have been added have been developed. The hydrogen storage capacity of misch metal-nickel multi-element alloys is in the order of 1.2 - 1.5 wt% at room temperature. These alloys are used in the development of energy storage and energy conversion technologies in a large number of fields such as nickel-hydrogen storage batteries, hydrogen storage, transport containers and metal hydride heat pumps.

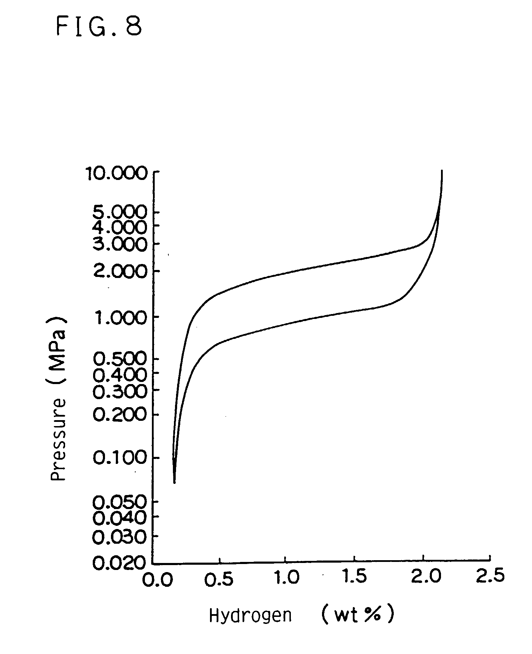

AB₂-type Laves phase alloys with a C14, C15 or C36 crystal structure have been previously investigated as hydrogen storage alloys. Many Laves phases alloys are known. Of these, an effective hydrogen storage alloy is one represented by the formula TiₐZr₁₋ₐM₂, wherein M is at least one element selected from the group consisting of Mn, Cr, V, Fe, Co and Mo and 0 ≦ a ≦ 1. One Laves phase alloy with a particularly large hydrogen storage capacity and exceptional plateau characteristics is the Ti_{0.9}Zr_{0.1}Mn_{1.4}Cr_{0.4}V_{0.2} alloy. This alloy has a large hydrogen storage capacity of 2.1 wt%, a hydride dissociation pressure close to room temperature of 0.9 MPa, and is easily activated. FIG. 8 shows the hydrogen pressure composition isotherm for Ti_{0.9}Zr_{0.1}Mn_{1.4}Cr_{0.4}V_{0.2} alloy (T. Gamo et al. "Life Properties of Ti-Mn Alloy Hydrides and Their Hydrogen Purification Effect", Journal of the Less-Common Metals, 89(1983) p.495).

In whatever use the hydrogen storage alloy is put to, a large effective hydrogen absorption-desorption capacity at the usage temperature is desirable. The above-mentioned LaNi₅ alloy has an effective hydrogen transfer capacity, that is, an effective hydrogen absorption-desorption capacity, of 1.2 wt% at room temperature. However, among the various Laves phase alloys of the AB₂-type, the Ti_{0.9}Zr_{0.1}Mn_{1.4}Cr_{0.4}V_{0.2} alloy, which has a large hydrogen storage capacity, has an effective hydrogen transfer capacity of 1.6 wt% at room temperature. It is presently desirable to develop alloys with a still greater effective hydrogen transfer capacity.

### SUMMARY OF THE INVENTION

The object of the present invention is to provide a hydrogen storage alloy which overcomes the above points, and is easily activated, has a large hydrogen storage capacity and a high effective hydrogen transfer capacity.

The present invention provides a hydrogen storage alloy represented by the general formula TiₐZr₁₋ₐM₂, wherein M is at least one element selected from the group consisting of manganese (Mn), chromium (Cr), vanadium (V), iron (Fe), cobalt (Co) and molybdenum (Mo) and wherein 0 ≦ a ≦ 1, the alloy having a Laves phase of a crystal structure, and containing at least one nonmetallic element selected from the group consisting of boron (B), carbon (C), nitrogen (N), sulfur (S) and selenium (Se), up to 2 atomic %.

Further, for the hydrogen storage alloy of the present invention, M may be partially substituted for by either Al, Zn, Cu, Nb or Ni. This is represented by the general formula TiₐZr₁₋ₐM_{2(1-b)}A_{2b}, when A is either Al or Zn, 0 < b ≦ 0.15. If A is Cu or Nb, 0 < b ≦ 0.3, and if A is Ni, 0 < b ≦ 0.75.

While the novel features of the invention are set forth particularly in the appended claims, the invention, both as to organization and content, will be better understood and appreciated, along with other objects and features thereof, from the following detailed description taken in conjunction with the drawings.

### BRIEF DESCRIPTION OF THE DRAWINGS

FIG. 1 is a diagram showing the hydrogen pressure composition isotherm at room temperature for the hydrogen storage alloy Ti_{0.9}Zr_{0.1}Mn_{1.4}Cr_{0.4}V_{0.2}S_{0.03} in one example of the present invention.

FIG. 2 is a diagram showing the hydrogen pressure composition isotherm at room temperature for the hydrogen storage alloy Ti_{0.6}Zr_{0.4}Cr_{1.0}Fe_{0.6}Mn_{0.4}Cu_{0.03}B_{0.015} in a different example of the present invention.

FIG. 3 is a diagram showing the hydrogen pressure composition isotherm at room temperature for the hydrogen storage alloy Ti_{0.6}Zr_{0.4}Cr_{1.0}Fe_{0.6}Mn_{0.4}Cu_{0.03}Se_{0.015} in a different example of the present invention.

FIG. 4 is a diagram showing the hydrogen pressure composition isotherm at room temperature for the hydrogen storage alloy ZrCr_{0.8}Fe_{1.2}S_{0.02} in a different example of the present invention.

FIG. 5 is a diagram showing the hydrogen pressure composition isotherm at room temperature for the hydrogen storage alloy ZrMn_{0.6}Cr_{0.3}Nb_{0.1}Ni_{0.8}Co_{0.2}C_{0.03} in a different example of the present invention.

FIG. 6 is a diagram showing the hydrogen pressure composition isotherm at room temperature for the hydrogen storage alloy Ti_{0.1}Zr_{0.9}Cr_{0.8}Fe_{1.0}Mo_{0.1}Cu_{0.1}S_{0.02} in a different example of the present invention.

FIG. 7 is a diagram showing the hydrogen pressure composition isotherm at room temperature for the hydrogen storage alloy ZrMn_{0.6}Cr_{0.2}V_{0.1}Ni_{1.1}S_{0.02} in a different example of the present invention.

FIG. 8 is a diagram showing the hydrogen pressure composition isotherm at room temperature for the hydrogen storage alloy Ti_{0.9}Zr_{0.1}Mn_{1.4}Cr_{0.4}V_{0.2} in the prior art.

### DESCRIPTION OF THE PREFERRED EMBODIMENTS

In the Laves phase alloys of the present invention, which contain at least one nonmetal element selected from the group consisting of B, C, N, S and Se, the nonmetal addition effect means that the alloy compositional changes can be controlled and the homogeneity of the alloy is high. As a result, the width of the plateau region of the hydrogen absorption-desorption curve is broad and the gradient of the curve is small, meaning it is possible to realize a hydrogen storage alloy with a high effective hydrogen transfer capacity. Further, the composition has an atomic ratio B/A of 2 as in the AB₂-type Laves phase alloy, and even when the Laves phase alloy has a solid solution region, the nonmetal addition effect is still apparent.

We, the inventors, while taking into account crystal structure considerations, designed a novel type of alloy and performed experiments to achieve the present invention. The slope of the plateau in the hydrogen absorption-desorption curve is generally the cause of unevenness in alloy crystals due to segregations or internal strains. By adding nonmetallic elements, it may be expected that the homogeneity of the alloy crystals and the flatness of the plateau region are increased. We have confirmed after preparing such alloys that the addition of nonmetals does not cause a decrease in the large hydrogen storage capacity and is indeed effective in improving the flatness of the plateau region.

By using the hydrogen storage alloy of the present invention, which has a high hydrogen absorption-desorption capacity, it is possible to achieve an improvement in efficiency in the fields of energy storage and transformation technology which utilize hydrogen storage alloys.

Below, an explanation is given referring to examples of the present invention.

### Example 1

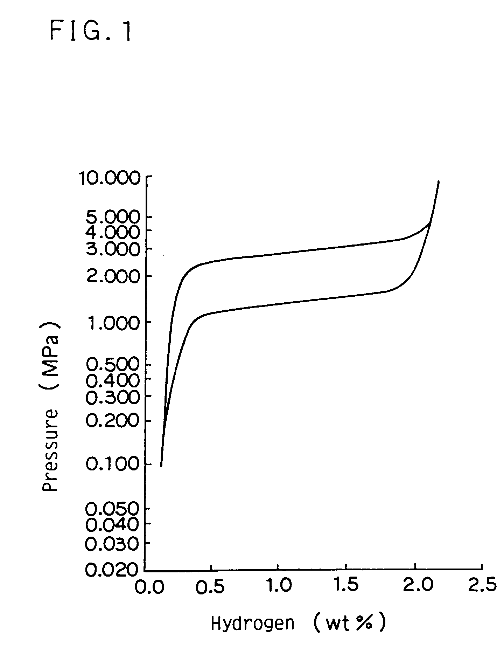

FIG. 1 is a diagram showing the hydrogen pressure-composition isotherm at room temperature for the hydrogen storage alloy Ti_{0.9}Zr_{0.1}Mn_{1.4}Cr_{0.4}V_{0.2}S_{0.03} of the present example.

7.91g of 99.5% pure metal Ti, 1.71g of 99.5% pure metal Zr, 14.31g of 99.9% pure metal Mn, 3.87g of 99.8% pure metal Cr, 1.8g of 99.7% pure metal V and 0.31g of 99.9% pure compound TiS₂ were weighed out. The metals Ti, Zr, Mn, Cr and V and compound TiS₂ were co-melted in an arc melting furnace under an argon atmosphere to form an alloy. The ingots were remelted five times while being rotated to form a homogeneous alloy. After performing a homogeneity heat treatment for 12 hours at 1100 °C, the obtained button ingots were powdered in a mortar and formed into samples for hydrogen absorption-desorption capacity measurements.

The hydrogen absorption-desorption capacity was tested by measuring the hydrogen pressure-composition isotherm. In this measurement, the change in the amount of hydrogen within a constant volume is determined from the pressure difference and the temperature before and after the measurement, and by calculating the change in hydride composition at a constant temperature, the amount of hydrogen reacting with the alloy is determined. After activating the sample, PCT measurement based on the vacuum condition, which is the original vacuum desorbed gas condition (hydrogen is zero), was taken. After activating the sample by placing in vacuum for six hours at room temperature, hydrogen absorption/desorption is repeated five times after which the above measurements are performed.

From FIG. 1 it is found that the greatest hydrogen storage capacity of the alloy is 2.1 wt%. This alloy shows a clear improvement in plateau flatness due to the addition of the nonmetallic element S. Due to the improvement in the plateau flatness the effective hydrogen transfer capacity is increased by about 10% compared to an alloy without S added. Further, as the source of S is the compound TiS₂, the desired S composition of 1 atomic % may be alloyed, as confirmed by analysis.

In the above example explained is the case where 1 atomic % of the nonmetallic element S is added to Ti_{0.9}Zr_{0.1}Mn_{1.4}Cr_{0.4}V_{0.2}. Table 1 shows the increase (%) in the effective hydrogen transfer capacity for each alloy with various nonmetallic elements added in various amounts to Ti_{0.9}Zr_{0.1}Mn_{1.4}Cr_{0.4}V_{0.2}.

**Table 1**

| Increase in the effective hydrogen transfer capacity | | | | |
|---|---|---|---|---|
| Added element | Added amount | | | |
| | 0.5 atomic % | 1.0 atomic % | 1.5 atomic % | 2.0 atomic % |
| B | 2% | 2% | 1.5% | 1% |
| C | 8 | 8 | 7.5 | 7 |
| N | 4 | 4 | 3.5 | 3 |
| S | 10 | 10 | 9.5 | 9 |
| Se | 6 | 6 | 5.5 | 5 |

The degree of the nonmetallic element addition effect is as follows. S is the most effective, followed by C, Se, N and B in that order. The addition of 1 atomic % of a nonmetallic element increases the effective hydrogen transfer capacity compared to the case of no addition by 8% for C, 6% for Se, 4% for N and 2% for B. Further, for any nonmetallic element, the effect appears gradually for addition up to 0.5 atomic %, and becomes manifest for addition greater than 0.5 atomic % to up to 2 atomic %. For addition exceeding 2 atomic %, the largest storage capacity falls sharply and the effective hydrogen transfer capacity also falls sharply. Therefore, the required amount for addition is not more than 2 atomic %.

In the present example, Mn, Cr and V have been taken for the B-site element in the AB₂-type Laves phase alloy. The B-site element can be one, or two or more elements selected from the group consisting of Mn, Cr, V, Fe, Co and Mo. For Laves phase alloys with compositions differing from the above-mentioned composition, the hydrogen pressure-composition isotherm will naturally have a different composition-pressure range compared to FIG. 1. However, the nonmetallic element addition effect is the same as for the present example.

### Example 2

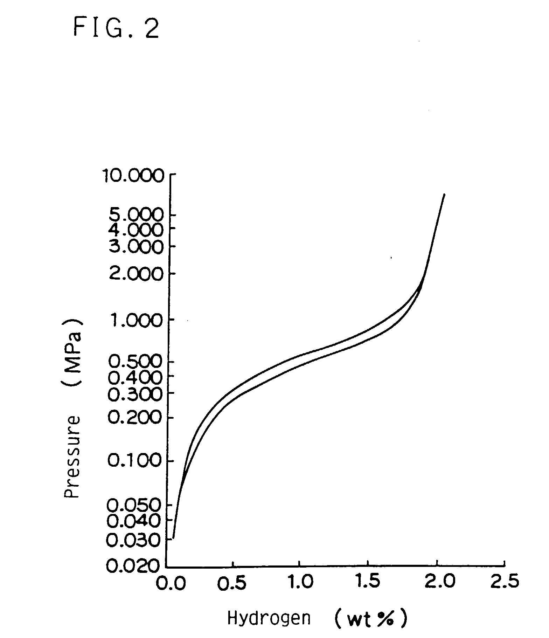

FIG. 2 is a diagram showing the hydrogen pressure-composition isotherm at room temperature for the hydrogen storage alloy Ti_{0.6}Zr_{0.4}Cr_{1.0}Fe_{0.6}Mn_{0.4}Cu_{0.03}B_{0.015} of the present example.

4.92g of 99.5% pure metal Ti, 6.14g of 99.5% pure metal Zr, 8.91g of 99.8% pure metal Cr, 5.76g of 99.9% pure metal Fe, 3.78g of 99.9% pure metal Mn, 0.33g of 99.9% pure metal Cu and 0.16g of 97% pure compound ZrB₂ were weighed out. The metals Ti, Zr, Cr, Fe, Mn and Cu and compound ZrB₂ were co-melted in an arc melting furnace under an argon atmosphere to form an alloy. The obtained button ingots were powdered as-cast and formed into samples for hydrogen absorption-desorption capacity measurements.

Hydrogen absorption-desorption tests were carried out for this sample by PCT measurement based on the vacuum condition in the same way as in Example 1.

From FIG. 2 it is found that the greatest hydrogen storage capacity of the alloy is 2.0 wt%. There is a clear improvement in plateau flatness due to the addition of the nonmetallic element B. Due to the improvement in the plateau flatness the effective hydrogen transfer capacity is increased by about 5% compared to an alloy without B added. Further, as the source of B is the compound ZrB₂, the desired B composition of 0.5 atomic % may be alloyed, as confirmed by analysis.

Table 2 shows the increase (%) in the effective hydrogen transfer capacity for each alloy with various nonmetallic elements added in various amounts to Ti_{0.6}Zr_{0.4}Cr_{1.0}Fe_{0.6}Mn_{0.4}Cu_{0.03}.

**Table 2**

| Increase in the effective hydrogen transfer capacity | | | | |
|---|---|---|---|---|
| Added element | Added amount | | | |
| | 0.5 atomic % | 1.0 atomic % | 1.5 atomic % | 2.0 atomic % |
| B | 5% | 5% | 1.5% | 5% |
| C | 8 | 8 | 7.5 | 7 |
| N | 4 | 4 | 3.5 | 3 |
| S | 10 | 10 | 9.5 | 9 |
| Se | 6 | 6 | 5.5 | 5 |

The degree of the nonmetallic element addition effect is as follows. S is the most effective, followed by C, Se, B and N in that order. For any nonmetallic element, the effect appears gradually for addition up to 0.5 atomic %, and becomes manifest for addition greater than 0.5 atomic % to up to 2 atomic %. For addition exceeding 2 atomic %, the greatest storage capacity falls sharply and the effective hydrogen transfer capacity also falls sharply. Therefore, the required amount for addition is not more than 2 atomic %.

The B-site element of the AB₂-type Laves phase alloy can be one, or two or more elements selected from the group consisting of Mn, Cr, V, Fe, Co and Mo. Even for Laves phase alloys with compositions differing from that of the present example, the nonmetallic element addition effect will be the same as for the present example.

### Example 3

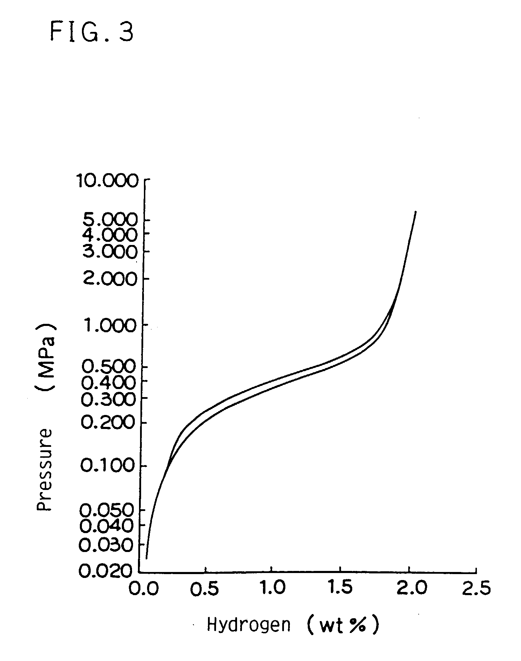

FIG. 3 is a diagram showing the hydrogen pressure-composition isotherm at room temperature for the hydrogen storage alloy Ti_{0.6}Zr_{0.4}Cr_{1.0}Fe_{0.6}Mn_{0.4}Cu_{0.03}Se_{0.015} of the present example.

4.83g of 99.5% pure metal Ti, 6.21g of 99.5% pure metal Zr, 8.88g of 99.8% pure metal Cr, 5.73g of 99.9% pure metal Fe, 3.75g of 99.9% pure metal Mn, 0.33g of 99.9% pure metal Cu and 0.27g of 99% pure compound TiSe₂ were weighed out. The metals Ti, Zr, Cr, Fe, Mn and Cu and compound TiSe₂ were co-melted in an arc melting furnace under an argon atmosphere to form an alloy. The obtained button ingots were powdered as-cast and formed into samples for hydrogen absorption-desorption capacity measurements.

Hydrogen absorption-desorption tests were carried out for this sample by PCT measurement based on the vacuum condition in the same way as in Example 1.

From FIG. 3 it is found that the greatest hydrogen storage capacity of the alloy is 2.0 wt%. There is a clear improvement in plateau flatness due to the addition of the nonmetallic element Se. Due to the improvement in the plateau flatness the effective hydrogen transfer capacity is increased by about 6% compared to an alloy without Se added. Further, as the source of Se is the compound TiSe₂, the desired Se composition of 0.5 atomic % may be alloyed, as confirmed by analysis.

Table 3 shows the increase (%) in the effective hydrogen transfer capacity for each alloy with various nonmetallic elements added in various amounts to Ti_{0.6}Zr_{0.4}Cr_{1.0}Fe_{0.6}Mn_{0.4}Cu_{0.03}.

**Table 3**

| Increase in the effective hydrogen transfer capacity | | | | |
|---|---|---|---|---|
| Added element | Added amount | | | |
| | 0.5 atomic % | 1.0 atomic % | 1.5 atomic % | 2.0 atomic % |
| B | 4% | 4% | 4% | 4% |
| C | 8 | 8 | 7.5 | 7 |
| N | 3 | 3 | 3.5 | 3 |
| S | 10 | 10 | 9.5 | 9 |
| Se | 6 | 6 | 5.5 | 5 |

The degree of the nonmetallic element addition effect is as follows. S is the most effective, followed by C, Se, N and B in that order. For any nonmetallic element, the effect appears gradually for addition up to 0.5 atomic %, and becomes manifest for addition greater than 0.5 atomic % to up to 2 atomic %. For addition exceeding 2 atomic %, the greatest storage capacity falls sharply and the effective hydrogen transfer capacity also falls sharply. Therefore, the required amount for addition is not more than 2 atomic %.

The B-site element of the AB₂-type Laves phase alloy can be one, or two or more elements selected from the group consisting of Mn, Cr, V, Fe, Co and Mo. Even for Laves phase alloys with compositions differing from that of the present example, the nonmetallic element addition effect will be the same as for the present example.

### Example 4

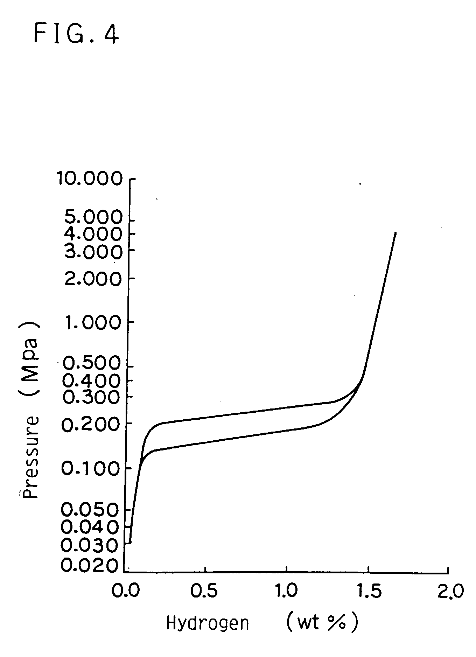

FIG. 4 is a diagram showing the hydrogen pressure-composition isotherm at room temperature for the hydrogen storage alloy ZrCr_{0.8}Fe_{1.2}S_{0.02} of the present example.

13.52g of 99.5% pure metal Zr, 6.22g of 99.8% pure metal Cr, 10.02g of 99.9% pure metal Fe, and 0.22g of 98% pure compound ZrS₂ were weighed out. The metals Zr, Cr and Fe and compound ZrS₂ were co-melted in an arc melting furnace under an argon atmosphere to form an alloy. The obtained button ingots were powdered as-cast and formed into samples for hydrogen absorption-desorption capacity measurements.

Hydrogen absorption-desorption tests were carried out for this sample by PCT measurement based on the vacuum condition in the same way as in Example 1. However, for this sample, activation was performed by placing it in vacuum for three hours at room temperature.

From FIG. 4 it is found that the greatest hydrogen storage capacity of the alloy is 1.6 wt%. There is a clear improvement in plateau flatness due to the addition of the nonmetallic element S. The plateau flatness factor was 0.25 during absorption and 0.30 during desorption. Due to the improvement in the plateau flatness the effective hydrogen transfer capacity is increased by about 10% compared to an alloy without S added. Further, as the source of S is the compound ZrS₂, the desired S composition of 0.6 atomic % may be alloyed, as confirmed by analysis.

Table 4 shows the increase (%) in the effective hydrogen transfer capacity for each alloy with various nonmetallic elements added in various amounts to ZrCr_{0.8}Fe_{1.2}.

**Table 4**

| Increase in the effective hydrogen transfer capacity | | | | |
|---|---|---|---|---|
| Added element | Added amount | | | |
| | 0.5 atomic % | 1.0 atomic % | 1.5 atomic % | 2.0 atomic % |
| B | 2% | 2% | 1.5% | 2% |
| C | 8 | 8 | 7.5 | 7 |
| N | 4 | 4 | 3.5 | 3 |
| S | 10 | 10 | 9.5 | 9 |
| Se | 6 | 6 | 5.5 | 5 |

The degree of the nonmetallic element addition effect is as follows. S is the most effective, followed by C, Se, N and B in that order. For any nonmetallic element, the effect appears gradually for addition up to 0.5 atomic %, and becomes manifest for addition greater than 0.5 atomic % to up to 2 atomic %. For addition exceeding 2 atomic %, the greatest storage capacity falls sharply and the effective hydrogen transfer capacity also falls sharply. Therefore, the required amount for addition is not more than 2 atomic %.

The B-site element of the AB₂-type Laves phase alloy can be one, or two or more elements selected from the group consisting of Mn, Cr, V, Fe, Co and Mo. Even for Laves phase alloys with compositions differing from that of the present example, the nonmetallic element addition effect will be the same as for the present example.

### Example 5

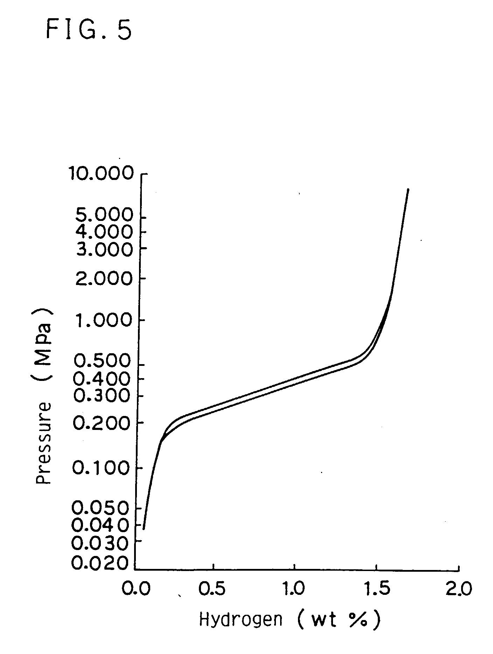

FIG. 5 is a diagram showing the hydrogen pressure-composition isotherm at room temperature for the hydrogen storage alloy ZrMn_{0.6}Cr_{0.3}Nb_{0.1}Ni_{0.8}Co_{0.2}C_{0.03} of the present example.

12.76g of 99.5% pure metal Zr, 4.74g of 99.9% pure metal Mn, 2.25g of 99.8% pure metal Cr, 1.35g of 99.9% pure metal Nb, 6.75g of 99.9% pure metal Ni, 1.71g of 99.7% pure metal Co, and 0.50g of 95% pure compound ZrC were weighed out. The metals Zr, Mn, Cr, Nb, Ni and Co and compound ZrC were co-melted in an arc melting furnace under an argon atmosphere to form an alloy. A homogeneity heat treatment at 1100 °C for 20 hours was performed on the obtained button ingots, which were then powdered and formed into samples for hydrogen absorption-desorption capacity measurements.

Hydrogen absorption-desorption tests were carried out for this sample by PCT measurement based on the vacuum condition in the same way as in Example 1. However, for this sample, activation was performed by placing it in vacuum for three hours at room temperature.

From FIG. 5 it is found that the greatest hydrogen storage capacity of the alloy is 1.6 wt%. There is a clear improvement in plateau flatness due to the addition of the nonmetallic element C. The plateau flatness factor was 0.58 during absorption and 0.58 during desorption. Due to the improvement in the plateau flatness the effective hydrogen transfer capacity is increased by about 8% compared to an alloy without C added. Further, as the source of C is the compound ZrC, the desired C composition of 1.0 atomic % may be alloyed, as confirmed by analysis.

Table 5 shows the increase (%) in the effective hydrogen transfer capacity for each alloy with various nonmetallic elements added in various amounts to ZrMn_{0.6}Cr_{0.3}Nb_{0.1}Ni_{0.8}Co_{0.2}.

**Table 5**

| Increase in the effective hydrogen transfer capacity | | | | |
|---|---|---|---|---|
| Added element | Added amount | | | |
| | 0.5 atomic % | 1.0 atomic % | 1.5 atomic % | 2.0 atomic % |
| B | 2% | 2% | 1.5% | 2% |
| C | 8 | 8 | 7.5 | 7 |
| N | 4 | 4 | 3.5 | 3 |
| S | 10 | 10 | 9.5 | 9 |
| Se | 6 | 6 | 5.5 | 5 |

The degree of the nonmetallic element addition effect is as follows. S is the most effective, followed by C, Se, N and B in that order. For any nonmetallic element, the effect appears gradually for addition up to 0.5 atomic %, and becomes manifest for addition greater than 0.5 atomic % to up to 2 atomic %. For addition exceeding 2 atomic %, the greatest storage capacity falls sharply and the effective hydrogen transfer capacity also falls sharply. Therefore, the required amount for addition is not more than 2 atomic %.

### Example 6

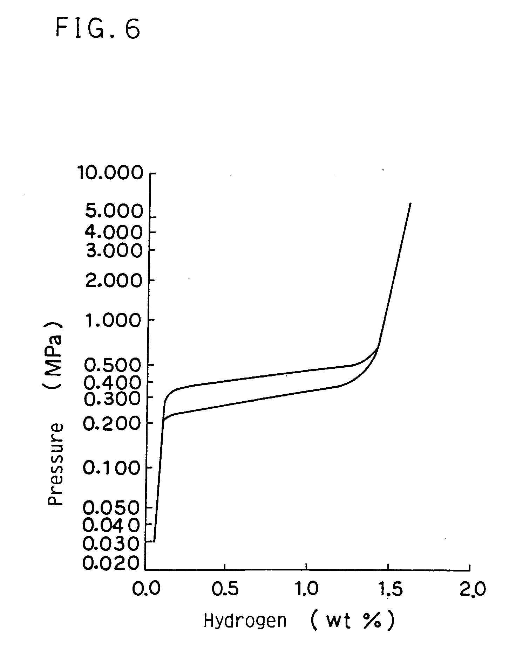

FIG. 6 is a diagram showing the hydrogen pressure-composition isotherm at room temperature for the hydrogen storage alloy Ti_{0.1}Zr_{0.9}Cr_{0.8}Fe_{1.0}Mo_{0.1}Cu_{0.1}S_{0.02} of the present example. In this alloy, Cu is added to improve the hysteresis.

0.65g of 99.5% pure metal Ti, 12.24g of 99.5% pure metal Zr, 6.21g of 99.8% pure metal Cr, 8.34g of 99.9% pure metal Fe, 1.44g of 99.9% pure metal Mo, 0.96g of 99.9% pure metal Cu, and 0.16g of 99.9% pure mother alloy TiS₂ were weighed out. The metals Ti, Zr, Cr, Fe, Mo and Cu and compound TiS₂ were co-melted in an arc melting furnace under an argon atmosphere to form an alloy. The ingots were remelted five times while being rotated to form a homogeneous alloy. The obtained button ingots were then powdered as-cast in a mortar and formed into samples for hydrogen absorption-desorption capacity measurements.

Hydrogen absorption-desorption tests were carried out for this sample by PCT measurement based on the vacuum condition in the same way as in Example 1. However, for this sample, activation was performed by placing it in vacuum for three hours at room temperature.

From FIG. 6 it is found that the greatest hydrogen storage capacity of the alloy is 1.6 wt%. There is a clear improvement in plateau flatness due to the addition of the nonmetallic element S. Due to the improvement in the plateau flatness the effective hydrogen transfer capacity is increased by about 10% compared to an alloy without S added. Further, as the source of S is the compound TiS₂, the desired S composition of 0.6 atomic % may be alloyed, as confirmed by analysis.

In the present example, Cu was used as the element A to replace M in the general formula above, at a content of 3.3 atomic %. It is possible to include up to 20 atomic % Cu. Alloys including Cu up to 20 atomic % are effective Laves phase alloys. For these alloys also, the nonmetallic element addition effect will be the same as for the present example.

### Example 7

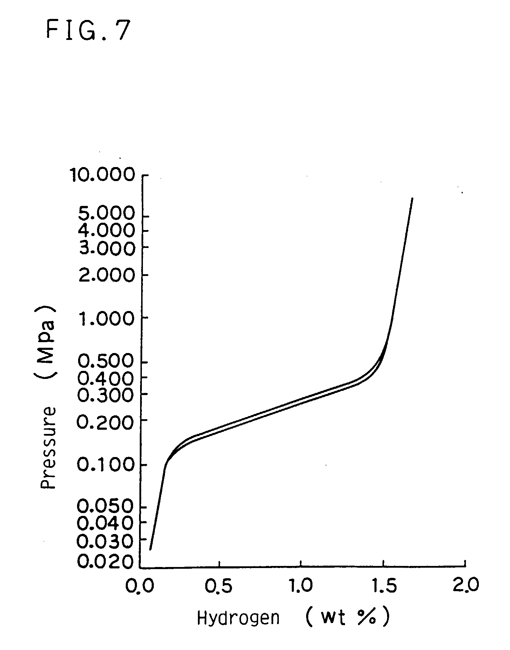

FIG. 7 is a diagram showing the hydrogen pressure-composition isotherm at room temperature for the hydrogen storage alloy ZrMn_{0.6}Cr_{0.2}V_{0.1}Ni_{1.1}S_{0.02} of the present example.

13.22g of 99.5% pure metal Zr, 4.83g of 99.9% pure metal Mn, 1.53g of 99.8% pure metal Cr, 0.75g of 99.7% pure metal V, 9.45g of 99.9% pure metal Ni, and 0.22g of 98% pure compound ZrS₂ were weighed out. The metals Zr, Mn, Cr, V, and Ni and compound ZrS₂ were co-melted in an arc melting furnace under an argon atmosphere to form an alloy. The ingots were remelted five times while being rotated to form a homogeneous alloy. A homogeneity heat treatment at 1000 °C for 20 hours was performed on the obtained button ingots, which were then powdered in a mortar and formed into samples for hydrogen absorption-desorption capacity measurements.

Hydrogen absorption-desorption tests were carried out for this sample by PCT measurement based on the vacuum condition in the same way as in Example 1. However, for this sample, activation was performed by placing it in vacuum for three hours at room temperature.

From FIG. 7 it is found that the greatest hydrogen storage capacity of the alloy is 1.6 wt%. There is a clear improvement in plateau flatness due to the addition of the nonmetallic element S. Due to the improvement in the plateau flatness the effective hydrogen transfer capacity is increased by about 10% compared to an alloy without S added, which was about 1.3 wt%. Further, as the source of S is the compound ZrS₂, the desired S composition of 0.6 atomic % may be alloyed, as confirmed by analysis.

In the present example, Ni was used as the substituting element for M in the general formula above, at a content of 37 atomic %. It is possible to include up to 50 atomic % Ni. Alloys including Ni up to 50 atomic % are effective Laves phase alloys which may be used in nickel-hydrogen batteries. For these Ni containing alloys also, the nonmetallic element addition effect will be the same as for the present example.

### Example 8

In the present example described is the addition of Al to the alloy of Ti_{0.1}Zr_{0.9}Cr_{0.8}Fe_{1.0}Mo_{0.1}Al_{0.1}S_{0.02} to improve the hysteresis.

As in the previous examples, the prescribed quantities of each metal and TiS₂ were co-melted in an arc melting furnace under an argon atmosphere to form an alloy. The ingots were remelted several times while being rotated to form a homogeneous alloy. The obtained button ingots were then powdered as-cast and hydrogen absorption-desorption capacity measurements were performed as in Example 1 by PCT measurement based on the vacuum condition at room temperature. The result shows that the greatest hydrogen storage capacity of the alloy is 1.6 wt%. There is a clear improvement in plateau flatness due to the addition of the nonmetallic element S. Due to the improvement in the plateau flatness the effective hydrogen transfer capacity is increased by about 10% compared to an alloy without S added.

In the present example, Al was used as the substituting element for M, at a content of 3.3 atomic %. It is possible to include up to 10 atomic % Al. Alloys including Al up to 10 atomic % are effective Laves phase alloys. For these alloys also, the nonmetallic element addition effect will be the same as for the present example.

### Example 9

In the present example described is the addition of Nb to the alloy of Ti_{0.1}Zr_{0.9}Cr_{0.8}Fe_{1.0}Mo_{0.1}Nb_{0.1}S_{0.02} to improve the hysteresis.

As in the previous examples, the prescribed quantities of each metal and TiS₂ were co-melted in an arc melting furnace under an argon atmosphere to form an alloy. The ingots were remelted several times while being rotated to form a homogeneous alloy. The obtained button ingots were then powdered as-cast and hydrogen absorption-desorption capacity measurements were performed as in Example 1 by PCT measurement based on the vacuum condition at room temperature. The result shows that the greatest hydrogen storage capacity of the alloy is 1.6 wt%. There is a clear improvement in plateau flatness due to the addition of the nonmetallic element S. Due to the improvement in the plateau flatness the effective hydrogen transfer capacity is increased by about 10% compared to an alloy without S added.

In the present example, Nb was used as the substituting element for M, at a content of 3.3 atomic %. It is possible to include up to 20 atomic % Nb. Alloys including Nb up to 20 atomic % are effective Laves phase alloys. For these alloys also, the nonmetallic element addition effect will be the same as for the present example.

### Example 10

In the present example described is the addition of Zn to the alloy of Ti_{0.1}Zr_{0.9}Cr_{0.8}Fe_{1.0}Mo_{0.1}Zn_{0.1}S_{0.02} to improve the hysteresis.

As in the previous examples, the prescribed quantities of each metal and TiS₂ were co-melted in an arc melting furnace under an argon atmosphere to form an alloy. The ingots were remelted several times while being rotated to form a homogeneous alloy. The obtained button ingots were then powdered as-cast and hydrogen absorption-desorption capacity measurements were performed as in Example 1 by PCT measurement based on the vacuum condition at room temperature. The result shows that the greatest hydrogen storage capacity of the alloy is 1.6 wt%. There is a clear improvement in plateau flatness due to the addition of the nonmetallic element S. Due to the improvement in the plateau flatness the effective hydrogen transfer capacity is increased by about 10% compared to an alloy without S added.

In the present example, Zn was used as the substituting element for M, at a content of 3.3 atomic %. It is possible to include up to 10 atomic % Zn. Alloys including Zn up to 10 atomic % are effective Laves phase alloys. For these alloys also, the nonmetallic element addition effect will be the same as for the present example.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

## Claims

1. A hydrogen storage alloy represented by the general formula TiₐZr₁₋ₐM₂, wherein M is at least one element selected from the group consisting of Mn, Cr, V, Fe, Co and Mo, and wherein 0 ≦ a ≦ 1, said alloy having a Laves phase of a crystal structure, and containing at least one nonmetallic element selected from the group consisting of B, C, N, S and Se, up to 2 atomic %.

2. A hydrogen storage alloy represented by the general formula TiₐZr₁₋ₐM_{2(1-b)}A_{2b}, wherein M is at least one element selected from the group consisting of Mn, Cr, V, Fe, Co and Mo, and wherein A is either Al or Zn, 0 ≦ a ≦ 1 and 0 < b ≦ 0.15, said alloy having a Laves phase of a crystal structure, and containing at least one nonmetallic element selected from the group consisting of B, C, N, S and Se, up to 2 atomic %.

3. A hydrogen storage alloy represented by the general formula TiₐZr₁₋ₐM_{2(1-b)}A_{2b}, wherein M is at least one element selected from the group consisting of Mn, Cr, V, Fe, Co and Mo, and wherein A is either Cu or Nb, 0 ≦ a ≦ 1 and 0 < b ≦ 0.3, said alloy having a Laves phase of a crystal structure, and containing at least one nonmetallic element selected from the group consisting of B, C, N, S and Se, up to 2 atomic %.

4. A hydrogen storage alloy represented by the general formula TiₐZr₁₋ₐM_{2(1-b)}A_{2b}, wherein M is at least one element selected from the group consisting of Mn, Cr, V, Fe, Co and Mo, and wherein A is Ni, 0 ≦ a ≦ 1 and 0 < b ≦ 0.75, said alloy having a Laves phase of a crystal structure, and containing at least one nonmetallic element selected from the group consisting of B, C, N, S and Se, up to 2 atomic %.
